(19) **Europäisches Patentamt**

**European Patent Office**

**Office européen des brevets**

(11) **EP 1 323 687 A2**

(12) **EUROPEAN PATENT APPLICATION**

(43) Date of publication:
02.07.2003 Bulletin 2003/27

(51) Int Cl.[7]: **C04B 35/622**

(21) Application number: **02258984.0**

(22) Date of filing: **27.12.2002**

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: **29.12.2001 KR 2001088372**

(71) Applicant: **Kumkang Korea Chemical Co., Ltd.**
**Seoul (KR)**

(72) Inventors:
 • **Hong, Won Kak**
  **Songpa-ku, Seoul (KR)**

 • **Lee, Jae Wook**
  **Sungnam, Kyunggi-do (KR)**
 • **Kim, Kyung Hwan**
  **Sungnam, Kyunggi-do (KR)**
 • **Kim, Jin Yeol**
  **Seoul (KR)**
 • **Kim, Hyung Sung**
  **Seoul (KR)**

(74) Representative: **Fairbairn, Angus Chisholm**
 **Marks & Clerk,**
 **57-60 Lincoln's Inn Fields**
 **London WC2A 3LS (GB)**

(54) **Biosoluble ceramic fiber composition with improved solubility in a physiological saline solution for a high temperature insulation material**

(57)    The present invention relates to a biosoluble ceramic fiber composition with a superior solubility in a physiological saline solution for a high heat insulating material, and more particularly to the biosoluble ceramic fiber composition wherein the physiological saline solubility is improved by optimizing the amounts of network former ($SiO_2$), network modifiers (CaO and MgO) and intermediates ($ZrO_2$ and $Al_2O_3$), especially the physiological saline solubility at a high-viscosity range with a high proportion of network former ($SiO_2$) is improved by optimizing the amounts of intermediates ($ZrO_2$ and $Al_2O_3$); thermal and mechanical properties such as a heat resistance, a compressive strength and a restoring force are so improved as to be superior even at a high temperature by optimizing the amounts of network modifiers (CaO and MgO); and the conventional fiber forming equipments can be still employed to an economical advantage.

**EP 1 323 687 A2**

**Description**

**FIELD OF THE INVENTION**

The present invention relates to a biosoluble ceramic fiber composition with improved solubility in a physiological saline solution for a high temperature insulation material, and more particularly to a soluble ceramic fiber composition with improved solubility in a physiological saline solution for a high temperature insulation material wherein the physiological saline solubility is improved by optimizing the amounts of network former ($SiO_2$), network modifiers (CaO and MgO) and intermediates ($ZrO_2$ and $Al_2O_3$), especially the physiological saline solubility is improved by optimizing the amounts of intermediates ($ZrO_2$ and $Al_2O_3$) at a high-viscosity range with a high proportion of network former ($SiO_2$); thermal and mechanical properties such as a heat resistance, a compressive strength and a restoring force are so improved as to be superior even at a high temperature by optimizing the amounts of network modifiers (CaO and MgO); and the conventional fiber forming equipments can be still employed to an economical advantage.

**DESCRIPTION OF THE RELATED ART**

As the ceramic fiber has a low thermal conductivity and a thin and long shape, it is commonly used as thermal insulation material at high and low temperature, a soundproofing material, a sound-absorbing material, a filtering material and the like.

As a thermal insulation material at high temperature, 'a refractory fiber for an insulating material' commonly means a refractory fiber which can be employed above the use temperature of mineral wool, and ASTM C892 classifies glassy-phase blanket high temperature insulation material into type 1 (732 °C) to type 5 (1649 °C) on a basis of thermal linear shrinkage at high temperature. 'Safe use temperature' of a fiber is generally defined as a maximum temperature at which a fiber exhibits a thermal linear shrinkage of 3 % (or 5 %) or less on exposure to the specified temperature for 24 hours.

The most widely used refractory fibers for an insulating material are those based on $Al_2O_3$-$SiO_2$ (RCF-AS) system having a safe use temperature of 1100-1260 °C. The prior art associated with the fibers based on $Al_2O_3$-$SiO_2$ (RCF-AS) system are as follows. U.S. Pat. No. 2,873,197 and 4,555,492 disclose the fibers based on $Al_2O_3$-$SiO_2$-$ZrO_2$ (RCF-ASZ) system further comprising a given amount of $ZrO_2$ with an increase of a safe use temperature of up to 1430 °C. U.S. Pat. No. 4,055,434 discloses a fiber based on $Al_2O_3$-$SiO_2$ system further comprising a maximum of 16% burned dolomite as a raw material of CaO and MgO having a refractory temperature of 760-1100 °C. U.S. Pat. No. 3,687,850 discloses a fiber which was prepared by leaching a composition comprising $SiO_2$, $Al_2O_3$, $R_2O$, RO and $B_2O_3$ in an acid thereby dissolving RO, $R_2O$ and

$B_2O_3$ and describes that a silica fiber comprising 76-90% of $SiO_2$ and 4-8% of $Al_2O_3$ has a refractory temperature of 1093 °C without deposition of crystalline material. However, in preparing the above-mentioned conventional refractory fibers for a heat insulating material, whereas a refractory property and solubility characteristics in an acid were considered, a solubility in an saline solution such as a physiological saline solution has never been considered and also the content of $Al_2O_3$ was as high as more than 4% thus causing a problem of a low solubility in a physiological saline solution.

According to a recent report, a fiber with a low solubility in a physical medium, when inhaled in a disintegrated and fine form and accumulated in the lung, may do harm to human health. Therefore, there recently have been heated researches in order to minimize the harmfulness of fiber by increasing a physiological solubility and at the same time to satisfy a need for a high temperature property.

Hereinafter are provided the related arts in connection with a glass fiber composition which is highly soluble in a physiological medium. For example, a bioabsorbable glass fiber composition comprising $CaF_2$, ZnO, SrO, $Na_2O$, $K_2O$, $Li_2O$ and the like as well as CaO and $P_2O_5$ [U.S. Pat. No. 4,604,097]; a Soda Lime Boro Silicate further comprising $P_2O_5$ [WO92/0781]; and a Soda Lime Boro Silicate further comprising $Na_2O$ with an increased amount of $B_2O_3$ [U.S. Pat. No. 5,055,428]. However, the above-mentioned compositions have a disadvantage of a poor refractory property due to a relatively high content of $R_2O$, and is limited in use as a biosoluble material usable in high temperature-there was no citation about safe use temperature in the above documents or the disclosed compositions are heat insulating building materials for a use at the temperature below 350 °C.

Moreover, hereinafter are provided refractory fibers capable of being used in high temperature having a superior solubility in a physiological saline solution as well. For example, a conventional mineral wool composition based on CaO, MgO, $SiO_2$ and

$Al_2O_3$ system with an improved solubility in a physiological saline solution and a refractory property by decreasing $Al_2O_3$ content and increasing the contents of CaO and MgO [WO87/05007]; a fiber composition comprising $SiO_2$ and CaO and optionally comprising MgO, alkali oxides, $Al_2O_3$, $ZrO_2$, $B_2O_3$, $Fe_2O_3$ and the like [WO89/12032]; and a composition based on $SiO_2$, CaO and MgO system with a lowered content of $Al_2O_3$ thus having safe use temperature of 800 °C, 1000 °C [WO93/15028]. However, the above-mentioned compositions are usable only in an area where the maximum safe use temperature is specified as 815 °C, 1000 °C (thermal linear shrinkage of 5% or less on exposure at the specified temperature for 24 hours).

Furthermore, hereinafter are provided the examples of fiber compositions having a superior solubility in a physiological saline solution with a maximum safe use temperature of 1260 °C. International Patent Publication WO94/15883 provides a fiber composition based on $SiO_2$, $CaO$ and $MgO$ further comprising $Al_2O_3$ and $ZrO_2$ wherein the residual $SiO_2$ content is more than and including 21.8 mol% and describes that in such a high $SiO_2$ content as 70.04 mol%, 73.09 mol% or 78.07 mol% the fiberization is difficult (with high content of unfiberized shot) or impossible to carry out. International Patent Publication WO97/16386 provides a biosoluble fiber composition which is easily fiberizable to give a fiber with a thermal linear shrinkage of less than 4.5% at 1260 °C, comprising $MgO$ and $SiO_2$ as principal constituents and further comprising less than 1% $CaO$ and 0-2% of $Al_2O_3$, $ZrO_2$ and $B_2O_3$ as a viscosity modifier. However, the fiber manufactures prepared from the above fiber composition has a coarse fiber diameter thus exhibiting a high thermal conductivity and shows a relatively high shrinkage (of more than 3%) upon exposure to 1260 °C for 24 hours.

Hitherto are described the ceramic fiber compositions developed up to date and there are still needs for good properties of ceramic fiber composition as follows.

In the conventional methods for fiberization, there are a blowing method using pressured air or steam and a spinning method dropping a melt on a cylinder rotating at a high speed. The ideal viscosity for fiberizing by the blowing method or the spinning method is as low as 20-100 poise or is similar to that of conventional composition based on $SiO_2$-$Al_2O_3$ system. If the viscosity is too high at fiberization temperature, the result is a coarse fiber diameter with a high proportion of coarse unfiberized shot. In contrast, if the viscosity is too low, the resulting fiber will be short and thin with a high proportion of fine shots. As the viscosity of a melt composition generally depends on fiber composition and temperature, there should be an appropriate design for maintaining a proper fiberization viscosity. Especially, in a composition with a high viscosity there should be a precautious viscosity control around fiberization temperature since the fiberization happens at a still higher temperature.

Moreover, the ceramic fiber for a high heat insulation should have only small change in the thermal properties even after exposure to a use temperature for a specified period of time since it should have a superior durability even under a repeated thermal stress as in a furnace material as well as a superior heat resistance. The use temperature of a ceramic fiber is directed to the shrinkage at the specified temperature. The shrinkage of a fiber manufacture is affected by the viscosity of glassy phase fiber composition at a high temperature, the type and the amount of crystallite which may form and grow upon exposure to heat while employed, its crystallization temperature, and the viscosity of residual glassy phase composition after the crystallite deposition at a high temperature. As the density of the crystallite deposited at a high temperature is commonly greater than that of the glassy phase fiber, the deposition and the growth of crystallite may cause a stress at a crystallite interface thus promoting the shrinkage by cleavage or deformation. When a fiber composition exists in a glassy phase at a high temperature without deposition of crystallite, the fiber gradually becomes less viscous at a relatively low temperature like glass thus causing shrinkage to increase.

Further, when a residual glassy phase after crystallite deposition have lower viscosity at a high temperature, the fiber shrinkage tends to increase due to a liquid phase sintering and deformation by viscous flow. Therefore, the fiber with such content as to show low shrinkage at a high temperature should have an appropriate crystallite deposition amount, rate and deposition temperature. As well should be small the variance of solubility in a physiological saline solution of a ceramic fiber after exposing to a high temperature. Therefore, it is important to choose such a content of composition as to cause the solubility in a physiological saline solution to be high, to facilitate the melting and fiberization, and to allow the thermal linear shrinkage at a high temperature to be low.

Moreover, there has been no report about harmfulness of glass wool, mineral wool and ceramic fiber to human body, since they have a superior solubility in a physiological saline solution compared to asbestos which is proven to be a carcinogenic substance. However, the result of toxicity test using animals showed that there is a certain relationship between a solubility in a physiological saline solution and toxicity of a fiber but that the fiber with a dissolution rate constant ($K_{dis}$) of 100 ng/cm$^2$·hr or higher does not cause any fibrosis or tumor in animal inhalation test [*Inhalation Toxicology,* 12:26-280, 2000, Estimating in vitro glass fiber dissolution rate from composition., Walter Eastes]. Actually, the fibers can be referred to as biosoluble only if they have at least higher than 150 ng/cm$^2$·hr, considering the dissolution rate constant exhibits the deviation of $\pm 30$ % in a biosolubility test using a physiological saline solution. Therefore, in the present invention, the criterion of dissolution rate constant($K_{dis}$) of ceramic fiber composition in a physiological saline solution is arranged as 200 ng/cm$^2$·hr.

## SUMMARY OF THE INVENTION

As a result of a intensive study performed by the inventors herein in an effort to develop a new ceramic fiber composition having a high fiberization yield, a low thermal conductivity and a superior biosolubility, the present invention was completed by keeping 75% or more the $SiO_2$ content of the composition based on CaO, MgO, $ZrO_2$ and $SiO_2$ system and by optimizing the amounts of $ZrO_2$ + $Al_2O_3$ and CaO + MgO.

Therefore, the objective of the present invention is to provide a ceramic fiber composition having a high fiberization yield and a low thermal conductivity with a linear shrinkage of 3% or less upon exposure 1260 °C for 24 hours wherein the linear shrinkage does not vary sharply even under a high temperature condition of above 1300 °C, and the dissolution rate constant in a physiological saline solution is 200 ng/cm2·hr or higher thus showing a superior biosolubility.

**BRIEF DESCRIPTION OF DRAWINGS**

FIG. 1 shows a relation between dissolution rate constants ($K_{dis}$) and contents of ($Al_2O_3$ + $ZrO_2$).

FIG. 2 shows a relation between dissolution rate constants ($K_{dis}$) and contents of MgO.

**DESCRIPTION OF THE INVENTION**

The present invention relates to a biosoluble ceramic fiber composition for a high temperature insulation material comprising 75-80 wt% of $SiO_2$, 13-25 wt% of CaO, 1-8 wt% of MgO, 0.5-3 wt% of $ZrO_2$ and 0-0.5 wt% of $Al_2O_3$, wherein the amount of $ZrO_2$ + $Al_2O_3$ is 0.5-3 wt% and the amount of CaO + MgO is 15-26 wt%.

Hereunder is given a more detailed description.

The present invention relates to a biosoluble ceramic fiber composition for a high temperature insulation material wherein a solubility in a physiological saline solution is improved by minimizing the amount of $Al_2O_3$ yet overcoming the deterioration of a thermal property due to the decrease of the amount of $Al_2O_3$ by addition of $ZrO_2$, and especially the solubility in a physiological saline solution is remarkably improved by increasing the amounts of network modifiers (CaO and MgO).

Hereunder is given a more detailed description based on a composition content.

First, it is preferable that the biosoluble ceramic fiber composition comprise 75-80 wt% of $SiO_2$ as a principal constituent. If the content of $SiO_2$ is less than 75 wt %, the contents of CaO and MgO should be increased to improve the biosolubility, which results in the problems of the rise of the cost of raw material, the high degree of shortening of a fiber length thus decreasing the stiffness, the difficulty in fiberization due to the increase of a unfiberized shot content, and the deterioration of property due to the increase of thermal shrinkage. In contrast, if the content of $SiO_2$ exceeds 80 wt%, there are drawbacks of the difficulty in melting a fiber composition and a elevated fiberization viscosity at a high temperature thus causing fiber diameter to be coarse and more amount of coarse unfiberized shot to be generated.

Moreover, a biosoluble ceramic fiber composition according to the present invention comprises a given amount of network modifiers (CaO and MgO) to increase a solubility of the produced composition in a physiological saline solution. It is preferable that the composition comprise CaO in an amount of 13-25 wt%. If the content is less than 13 wt%, the biosolubility, i.e. the solubility in a physiological saline solution is decreased. In contrast, if the content exceeds 25 wt%, the amount of crystallite deposited during the preparation of a fiber is increased thus decreasing the $SiO_2$ content thereby giving problems of the deterioration of high-temperature stability and the increase of thermal linear shrinkage. Further, it is preferable that a composition according to the present invention comprise MgO in an amount of 1-8 wt%. If the content of MgO is less than 1 wt%, there are problems of the decrease of the solubility in a physiological saline solution and the decrease of the effect of inhibiting the growth of a fiber crystallite during the preparation of a fiber. In contrast, if the content exceeds 8 wt%, there are problems of the increase of the fiberization viscosity and the decrease of the fiberization melting point near the eutectic point of Diopside and Wollastonite. Moreover, it is possible to replace the MgO with low-priced materials such as dolomite, limestone and the like to give the equivalent effect of the present invention.

It is preferable that a composition according to the present invention comprise CaO and MgO as network modifiers in the total amount of 15-26 wt%. If the amount of CaO + MgO is less than 15 wt%, the solubility in a physiological saline solution is decreased, whereas if the amount of CaO + MgO exceeds 26 wt%, the stability of fiber composition at a high temperature is deteriorated and the production of crystallite produced at a high temperature is increased thus to deteriorating the durability.

A composition of the present invention comprises $Al_2O_3$ as an intermediate. It is preferable that the composition comprise 0-0.5 wt% of $Al_2O_3$. If the content of $Al_2O_3$ exceeds 0.5 wt%, there are problems of the decrease of the solubility in a physiological saline solution and the lowering of the heat resistance temperature. In particular, a composition according to the present invention comprises $ZrO_2$, preferably in an amount of 0.5-3 wt%, in order to inhibit the problems of the deterioration of a stability at a high temperature and the lowering of the chemical resistance which may be induced by minimizing the content of $Al_2O_3$. If the content of $ZrO_2$ is less than 0.5 wt%, it is difficult to melt and fiberize a composition according to the present invention, whereas if the content of $ZrO_2$ exceeds 3 wt%, the solubility in a physiological saline solution is remarkably decreased. It is preferable that a composition according to the present

invention comprise $ZrO_2$ and $Al_2O_3$ as intermediates in the total amount of 0.5-3 wt%. If the amount of $ZrO_2 + Al_2O_3$ is less than 0.5 wt%, the high heat resistance of the fiber is deteriorated and the fiberization yield is lowered due to the increase of melt viscosity. In contrast, if the amount of $ZrO_2 + Al_2O_3$ exceeds 3 wt%, the solubility of fiber in a physiological saline solution is decreased and thus deteriorating the biosolubility.

In addition, a fiber composition according to the present invention can further comprise $B_2O_3$, $P_2O_5$ or mixture thereof as glass forming oxides having low melting temperature for increasing the solubility of a fiber in a physiological saline solution. The composition can comprise 0-0.5 wt% of $B_2O_3$ and 0-0.5wt% of $P_2O_5$, and it is preferable the amount of $B_2O_3 + P_2O_5$ is in the range of 0.1-1 wt%. Especially, it is more preferable that the composition comprise $B_2O_3$ and $P_2O_5$ when fiber is prepared with an increased amount of $SiO_2$. It is because the problems can be inhibited by further adding $B_2O_3$ an $P_2O_5$ that the fiberization yield with the increase of a viscosity of fiber composition at a elevated amount of $SiO_2$ and the solubility of fiber in a physiological saline solution are decreased.

Moreover, a biosoluble ceramic composition for a high temperature insulation material according to the present invention can further comprise 1 wt% or less of impurities such as $Na_2O$, $K_2O$, $TiO_2$ and $Fe_2O_3$. Although the impurities can be introduced into the composition as impurities of raw materials, if included in excess, there can be problems that the reactions among the components of the fiber composition can be reduced and thermal property of fiber can be deteriorated as well.

The present invention also relates to the a fiber prepared with the above-mentioned fiber composition, wherein a shot content is 50 wt% or less, an average fiber diameter does not exceed 6 μm, a thermal linear shrinkage (upon exposure to 1260 °C for 24 hrs) is 3% or less, the change of the linear shrinkage is not dramatic even above the temperature of 1300 °C, and the dissolution rate constant in a physiological saline solution is 200 ng/cm$^2$·hr or higher. In particular, when the amount of $ZrO_2 + Al_2O_3$ is in the range of 0.5-1.5 wt%, the fiber according to the present invention shows 300 ng/cm$^2$·hr or higher of the dissolution rate constant in an physical saline solution. In addition to the aforementioned superior properties of the ceramic fiber according to the present invention, the conventional fiber preparation process can be still utilized to an economical advantage.

In fiberizing a ceramic fiber according to the present invention, the conventional methods such as a blowing method or a spinning method can be employed. The viscosity range needed for utilizing the aforementioned conventional fiberization methods is 20-100 poise. As the viscosity of a melt is a function of temperature and composition, the viscosity of the melt with given compositions depends on the temperature. If the fiberization temperature is high, the viscosity of the melt will be lowered, and vice versa, thus affecting the fiberization. When the viscosity of a fiber solution is too low at the fiberization temperature, there are problems that a short and thin fiber is produced and the fiberization yield is too low due to a high content of unfiberized shot. In contrast, if the viscosity is too high, there are problems of resulting fiber having coarse fiber diameter, with a high proportion of coarse unfiberized shot. Therefore, to determine proper fiberization properties, the properties of produced fiber(fiber diameter, shot content etc) can be analyzed and compared to those of conventional RCF based on $Al_2O_3$-$SiO_2$ system.

[Test Methods]

1. Fiberizability: The fiberizability was determined based on the possibility of manufacturing fiber with a conventional fiber preparation equipment under a condition where the unfiberized shot content is 50% or less and the average fiber diameter does not exceed 6 μm.

2. Average fiber diameter: The average fiber diameter was determined by measuring for more than 500 fibers using an electron microscope at a magnification of larger than 1000X.

3. Unfiberized shot content: The unfiberized shot content was determined according to ASTM C892. The ceramic fiber was thermally treated at 1260 °C for 5 hours and a test sample was weighed 10 g with a precision of 0.0001 g ($W_0$). The test sample was put through 30 mesh sieve using a rubber rod. After putting the test sample through 50 and 70 mesh sieves respectively, residual particles were weighed ($W_1$) and the unfiberized shot content ($W_s$) was calculated using the below equation 1.

[Equation 1]

$$W_s = \frac{W_1}{W_0} \times 100$$

wherein, $W_s$ represents the unfiberized shot content, $W_0$ represents the initial particle weight and $W_1$ represents the weight of the residual particles.

The high-temperature property of a refractory fiber for a high temperature insulation material is commonly determined by a thermal linear shrinkage measured from the length change of specimen which is wet-formed with starch at a high temperature. To determine a thermal linear shrinkage of the ceramic fiber, a test sample was prepared with the fiber as a pad shape. A pad was made by sufficiently dispersing 220 g of fiber in a 0.2 % of starch water solution and forming and smoothing the uneven dispersed fiber to decrease surface deviation followed by draining through a bottom of a molder. Then, the pad-shaped test sample was prepared by sufficiently drying the pad in an oven at 50 °C for more than 24 hours and cutting into a size of 150x100x25 mm. Test marks were made on the pad-shaped test samples using sufficiently refractory materials such as platinum, ceramic or the like. After measuring the distances between the test marks using vernier calipers, the test samples were placed in a furnace, heated at 1260 °C for 24 hours, at 1260 °C for 168 hours, at 1300 °C for 24 hours, and 1350 °C for 24 hours, respectively, and cooled slowly. The distances between the test marks were measured and the thermal linear shrinkages were calculated using the below equation 2.

Equation 2

$$\text{Thermal linear shrinkage (\%)} = \frac{L_0 \text{-} L_1}{L_0} \times 100$$

wherein, $L_0$ and $L_1$ represent an average distance before and after heating between the test marks, respectively.

To evaluate the solubility of the prepared fiber in a physiological saline solution, the dissolution rate constant was obtained as described below. The experimental method was described in detail in Law et al (1990). An *in vitro* biosolubility of ceramic fiber was evaluated by a dissolution in a physiological saline solution. A dissolution rate constant ($K_{dis}$) was calculated using the below equation 3 with the results shown in the following Table 3.

Equation 3

$$K_{dis} = \frac{d_0 \rho \sqrt{1 \text{-} M/M_0}}{2t}$$

wherein, $d_o$ means an initial average fiber diameter, $\rho$ represents an initial density of fiber, $M_0$ represents an initial mass of fiber, M represents a mass of residual fiber after dissolution, and t represents a test time.

In the following TABLE 1 are shown the contents of ingredients in 1 L of a physiological saline solution used to determine the dissolution rate of fiber (Gamble solution).

TABLE 1

| Ingredients | Content (g/L) |
|---|---|
| NaCl | 7.120 |
| $MgCl_2 \cdot 6H_2O$ | 0.212 |
| $CaCl_2 \cdot 2H_2O$ | 0.029 |
| $Na_2SO_4$ | 0.079 |
| $Na_2HPO_4$ | 0.148 |
| $NaHCO_3$ | 1.950 |
| $Na_2 \cdot 2H_2O$ | 0.180 |
| $Na_3 \cdot 2H_2O$ | 0.152 |
| Lactic acid (90%) | 0.156 |
| Glycine | 0.118 |
| Na-pyruvate | 0.172 |

The dissolution rate was measured by placing a ceramic fiber according to the present invention and a commercial inorganic fiber in a gap of the 0.2 μm of polycarbonate membrane filter fixed to plastic filter supporter followed by filtering a physiological through the filter. During the measurement, the physiological saline solution was maintained at 37 °C with a flow rate of 135 mL/day and pH was maintained at $7.4 \pm 0.1$ using $CO_2/N_2$ (5/95%) gas.

The fibers had been leached for 21 days to exactly determine the dissolution of fiber which takes place for a long time and the dissolved ions was determined by analyzing a physiological saline solution which was filtered at given intervals (1, 4, 7, 11, 14 and 21 days) using the Inductively Couples Plasma Spectrometry (ICP), and then the dissolution rate constant was obtained by the above-mentioned equation 3.

The present invention is explained in more detail based on the following Examples without limitations thereby.

**EXAMPLES**

**Test Example 1: Fiberizability**

After preparing ceramic fiber compositions with the specified ingredients and contents (as shown in TABLE 2), ceramic fibers were manufactured using the conventional RCF inorganic fiber preparation process.

The results of fiberizability, average fiber diameter, unfiberized shot content of the produced ceramic fiber are also shown in TABLE 2.

TABLE 2

| Fiber composition | Ingredients (wt%) | | | | | | | | Fiberizability | Average diameter (μm) | Shot content (%) |
|---|---|---|---|---|---|---|---|---|---|---|---|
| | $SiO_2$ | CaO | MgO | $ZrO_2$ | $Al_2O_3$ | $B_2O_3$ | $P_2O_5$ | Impurity | | | |
| Example 1 | 77.75 | 15.87 | 4.08 | 1.97 | 0.19 | - | - | 0.14 | Yes | 3.9 | 24 |
| Example 2 | 75.78 | 15.00 | 6.96 | 2.01 | 0.16 | - | - | 0.09 | Yes | 3.9 | 29 |
| Example 3 | 77.58 | 16.48 | 4.00 | 1.46 | 0.34 | - | - | 0.14 | Yes | 4.7 | 33 |
| Example 4 | 75.61 | 16.45 | 5.83 | 1.32 | 0.17 - | | - | 0.62 | Yes | 4.2 | 32 |
| Example 5 | 75.70 | 16.79 | 6.21 | 0.57 | 0.14 | - | - | 0.59 | Yes | 4.9 | 35 |
| Example 6 | 75.96 | 18.61 | 4.32 | 0.81 | 0.16 | - | - | 0.14 | Yes | 4.1 | 28 |
| Example 7 | 76.03 | 19.52 | 1.96 | 1.77 | 0.23 | 0.32 - | | 0.17 | Yes | 4.3 | 30 |
| Example 8 | 77.53 | 14.82 | 4.50 | 1.78 | 0.31 | - | 0.41 | 0.65 | Yes | 4.10 | 32 |
| Example 9 | 76.02 | 17.12 | 4.24 | 1.25 | 0.16 | 0.33 | 0.31 | 0.57 | Yes | 3.9 | 29 |
| Comparative Example A | 49.42 | - | - | - | 49.98 | - | - | 0.60 | Yes | 3.7 | 30 |
| Comparative Example B | 64.75 | - | - | 14.92 | 19.78- | | - | 0.55 | Yes | 3.8 | 32 |
| Comparative Example C | 66.63 | 20.38 | 12.89 | - | - | - | - | 0.1 | Yes | 7.19 | 30 |
| Comparative Example D | 78.53 | 0.24 | 18.67 | - | 1.73 | - | - | 0.83 | Yes | 4.52 | 42 |
| Comparative Example 1 | 74.37 | 20.01 | 2.01 | 2.03 | 1.18 | - | - | 0.40 | Yes | 4.0 | 29 |
| Comparative Example 2 | 76.36 | 16.95 | 4.39 | 1.05 | 0.87 | - | - | 0.38 | Yes | 4.3 | 29 |
| Comparative Example 3 | 75.32 | 16.74 | 4.57 | 1.75 | 0.94 | - | - | 0.68 | Yes | 4.5 | 25 |
| Comparative Example 4 | 75.65 | 15.08 | 4.90 | 1.96 | 0.21 | 1.68 | - | 0.52 | Yes | 4.0 | 23 |
| Comparative Example 5 | 75.08 | 21.05 | 0.53 | 2.03 | 0.16 | 1.00 | - | 0.15 | Yes | 4.1 | 28 |
| Comparative Example 6 | 75.96 | 19.98 | 0.27 | 1.99 | 0.15 | 1.50 | - | 0.15 | Yes | 4.1 | 21 |
| Comparative Example 7 | 75.46 | 21.99 | 0.30 | 1.46 | 0.14 | 0.50 | - | 0.15 | Yes | 4.3 | 30 |
| Comparative Example 8 | 75.21 | 18.51 | 5.70 | 0.03 | 0.13 | - | - | 0.42 | Yes | 4.0 | 48 |
| Comparative Example 9 | 75.18 | 16.63 | 4.28 | 1.69 | 1.87 | - | - | 0.35 | Yes | 4.3 | 30 |
| Comparative Example 10 | 75.01 | 16.11 | 3.20 | 4.84 | 0.06 | - | - | 0.78 | Yes | 5.1 | 33 |
| Comparative Example 11 | 76.55 | 17.36 | 1.72 | 1.63 | 1.88 | - | - | 0.86 | Yes | 4.2 | 31 |

8

TABLE 2 (continued)

| Fiber composition | Ingredients (wt%) | | | | | | | | Fiberizability | Average diameter (μm) | Shot content (%) |
|---|---|---|---|---|---|---|---|---|---|---|---|
| | SiO$_2$ | CaO | MgO | ZrO$_2$ | Al$_2$O$_3$ | B$_2$O$_3$ | P$_2$O$_5$ | Impurity | | | |
| Comparative Example 12 | 80.85 | 12.08 | 2.01 | 0.98 | 3.58 | - | - | 0.50 | No | 6.3 | 45 |
| Comparative Example 13 | 81.49 | 12.39 | 3.45 | 1.26 | 1.04 | - | - | 0.37 | No | 6.0 | 55 |
| Comparative Example 14 | 82.52 | 10.61 | 3.14 | 0.15 | 2.76 | - | - | 0.82 | No | 5.9 | 56 |
| Comparative Example 15 | 83.27 | 9.86 | 3.11 | 2.02 | 1.28 | - | - | 0.46 | No | 6.1 | 60 |

As shown in the above TABLE 2, the average fiber diameter generally tends to increase with the increase of $SiO_2$ content, showing some differences in average fiber diameter and yield due to the combined effect of other ingredients such as CaO, MgO, $Al_2O_3$, $B_2O_3$, $P_2O_5$ and $ZrO_2$.

The fiber with a coarse fiber diameter and a rough surface generally has disadvantages of a low insulating effect and unfriendliness to the touch. However, it can be mentioned that the fiber prepared with a fiber composition according to the present invention has high-quality property because its average diameter is smaller than that of commercial ceramic fiber (6 μm) and high fiberization yield due to the low shot content of less than 50%.

Moreover, the fiber compositions further comprising a small amount of $B_2O_3$ or $P_2O_5$ according to Examples 7~9 exhibited advantages of a fine average fiber diameter and a higher fiberization yield.

In the above TABLE 2, Comparative Examples A ($Al_2O_3$-$SiO_2$ system), B ($Al_2O_3$-$SiO_2$-ZrO2 system), C and D are examples of conventional ceramic fiber. In the ceramic fibers according to Examples 1-9, the average fiber diameters were all below 6 μm in a range of 3.9-4.9 μm and the unfiberized shot contents are less than 50% in a range of 24-35%, and thus it could be expected that the fiberization yield would be high and the heat insulating effect would be superior.

The ceramic fiber prepared according to Comparative Example 8 comprises very small amount of $Al_2O_3$ + $ZrO_2$ (0.16 wt%) with the unfiberized shot content rising up to 48% due to the increase of melt viscosity. In contrast, in the ceramic fiber prepared according to Example 5 comprising 0.71 wt % of amount of $Al_2O_3$ + $ZrO_2$, the unfiberized shot content decreased down to 35%, which shows the fact that the amount of $Al_2O_3$ + $ZrO_2$ should be 0.5 wt% or higher.

Moreover, in the range of still higher than 80 wt% of $SiO_2$ content as in Comparative Examples 12-15, the melt viscosity was high and the fiber was prolonged; and unfiberized shot content was high thus exhibiting a lowered fiberization yield, thereby causing the fiberization to be impossible to carry out.

**Test Example 2: Biosolubility**

The following TABLE 3 shows the rate constant of dissolution in a physical saline solution ($K_{dis}$) for each fiber composition prepared according to aforementioned Examples and Comparative Examples.

TABLE 3

| Fiber composition | $K_{dis}$ (ng/cm$^2$·hr) | Fiber composition | $K_{dis}$ (ng/cm$^2$·hr) |
|---|---|---|---|
| Example 1 | Comparative 227 | Example 1 | 129 |
| Example 2 | 289 | Comparative Example 2 | 292 |
| Example 3 | 286 | Comparative Example 3 | 170 |
| Example 4 | 370 | Comparative Example 4 | 385 |
| Example 5 | 449 | Comparative Example 5 | 134 |
| Example 6 | 423 | Comparative Example 6 | 117 |
| Example 7 | 202 | Comparative Example 7 | 100 |
| Example 8 | 355 | Comparative Example 8 | 550 |
| Example 9 | 360 | Comparative Example 9 | 110 |
| Comparative Example A | 10 | Comparative Example 10 | 120 |
| Comparative Example B | 15 | Comparative Example 11 | 85 |
| Comparative Example C | 600 | | |
| Comparative Example D | 280 | | |

As shown in the above TABLE 3, the conventional RCF fiber compositions prepared according to Comparative Examples A and B showed less than 20 ng/cm$^2$·hr of dissolution rate constants. In contrast, the dissolution rate constant of a fiber compositions according to the present invention are maintained in an appropriate range of 202-449 ng/cm$^2$·hr thereby showing a usefulness for a biosoluble material.

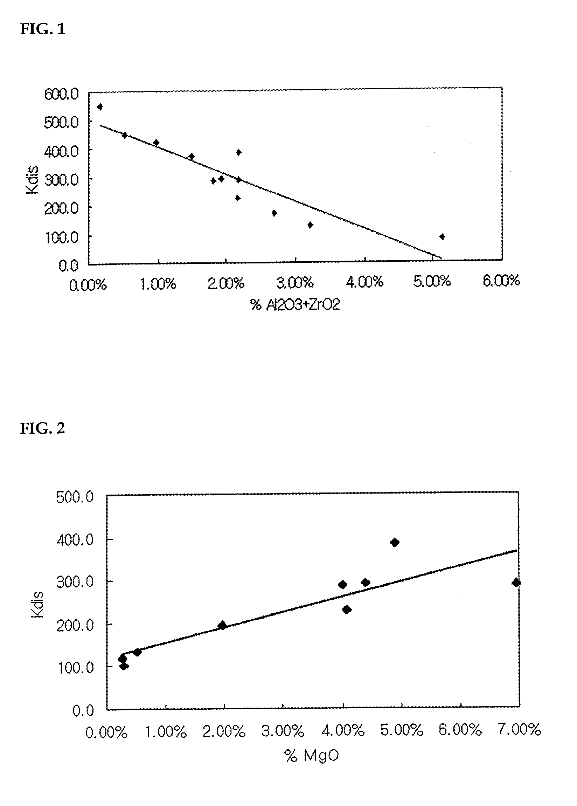

The relationship between a dissolution rate constant and an amount of $Al_2O_3$ + $ZrO_2$ is illustrated in FIG. 1. As shown in FIG. 1, as the amounts of $Al_2O_3$ and $ZrO_2$ increase, the dissolution rate constant tends to decrease. Furthermore, as the fiber compositions with the $Al_2O_3$ + $ZrO_2$ amount of more than 3 wt% according to Comparative Examples 1, 9-11 have low dissolution rate constants (129, 110, 120, 85 ng/cm$^2$·hr, respectively), it was conclusively preferable in an aspect of biosolubility of a ceramic fiber to limit below 3 wt% the amount of $Al_2O_3 + ZrO_2$ which are known as ingredients increasing durability. In the fiber compositions according to the present invention, it was when an amount of $Al_2O_3 + ZrO_2$ did not to exceed 1.5 wt% that the dissolution rate constant was maintained higher than 300 ng/cm$^2$·hr.

As shown in FIG. 2, the fiber compositions according to Comparative Examples 5-7 have low dissolution rate constants even though their amounts of $Al_2O_3 + ZrO_2$ are 2.19, 2.14 and 1.60 wt% respectively, supposedly due to the decrease of amount of MgO. FIG. 2 represents a comparison among the fiber compositions in which the amounts of $Al_2O_3 + ZrO_2$ are all around 2 wt% and the amounts of CaO + MgO are all around 20 wt%. Even though the increase of network modifiers such as alkaline earth metal is, in turn, expected to increase the dissolution rate constant, FIG. 2 shows that the dissolution rate constant can be lowered at the same amount of CaO + MgO, if the fiber composition comprises relatively too small amount of MgO. Therefore, in order to obtain a high dissolution rate constant, the amount of MgO should be 4 wt% or higher, at the same time the amount of $Al_2O_3 + ZrO_2$ should be approximately 1.5 wt% or less.

Therefore, the contents where the ceramic compositions are fiberizable and highly biosoluble are that 75-80 wt% of $SiO_2$, 13-22 wt% of CaO, 1-8 wt% of MgO, 0.5-3 wt% of $ZrO_2$ and 0-0.5 wt% of $Al_2O_3$. In addition, when the amount of $Al_2O_3 + ZrO_2$ is 0.5-3 wt% (more preferably 0.5-1.5 wt%) and the amount of MgO is 4 wt% or higher, the dissolution rate constant exhibited to be high.

Moreover, the present invention also relates to a fiber composition further comprising a predetermined amount of $B_2O_3$ and $P_2O_5$ to increase a dissolution rate constant. The addition of $B_2O_3$ and $P_2O_5$ to the fiber composition generally increases the dissolution rate constant.

**Test Example 3: Thermal linear shrinkage**

A thermal linear shrinkage of a ceramic fiber was measured and given in the following TABLE 4.

TABLE 4

| Fiber composition | Linear Shrinkage (%) | | | |
|---|---|---|---|---|
| | 1260 °C | | 1300 °C | 1350 °C |
| | 24 | 168 hrs | 24 hrs | |
| Example 1 | 2.7 | 3.5 | 3.5 | 6.9 |
| Example 2 | 1.8 | 2.4 | 2.9 | 6.7 |
| Example 3 | 1.5 | 2.3 | 2.7 | 6.8 |
| Example 4 | 1.3 | 2.2 | 2.7 | 6.6 |
| Example 5 | 1.9 | 2.4 | 3.0 | 6.8 |
| Example 6 | 2.3 | 2.7 | 3.2 | 7.1 |
| Example 7 | 1.6 | 2.5 | 3.0 | 6.9 |
| Example 8 | 1.5 | 2.8 | 3.1 | 7.2 |
| Example 9 | 1.4 | 2.6 | 3.0 | 7.1 |
| Comparative Example A | 1.5 | 2.3 | 3.7 | 5.2 |
| Comparative Example B | 1.3 | 2.0 | 2.2 | 2.7 |
| Comparative Example C | 1.55 | 1.70 | Melting | Melting |
| Comparative Example D | 5.7 | 5.98 | 7.4 | 7.8 |
| Comparative Example 1 | 3.1 | 4.9 | 7.1 | 8.3 |
| Comparative Example 2 | 4.1 | 4.9 | 8.3 | 9.1 |
| Comparative Example 3 | 4.1 | 4.9 | 8.4 | 9.1 |
| Comparative Example 4 | 6.1 | 8.3 | 35.7 | - |
| Comparative Example 5 | 4.3 | 5.2 | 18.5 | - |
| Comparative Example 6 | 4.9 | 5.8 | 25.8 | - |

TABLE 4 (continued)

| Fiber composition | Linear Shrinkage (%) | | |
|---|---|---|---|
| | 1260 °C | 1300 °C | 1350 °C |
| | 24 | 168 hrs | 24 hrs | |
| Comparative Example 8 | 2.1 | 4.3 | 5.8 | 8.6 |

The ceramic fibers prepared with the compositions according to Examples 1-9 of the present invention, when thermally treated at 1260 °C for 24 hours, showed a low thermal linear shrinkage of less than 3% in a range of 1.3-2.7%, and even when thermally treated at the same temperature for 168 hours, showed a relatively low thermal linear shrinkage ranging 2.2-3.5%. In contrast, as shown in Comparative Examples 1-3, the shrinkage increased rapidly when the amount of $Al_2O_3$ was 0.5 wt% or higher. The fiber compositions according to Comparative Examples 4-6 comprising $B_2O_3$ in an amount of 0.5 wt% or higher exhibited a thermal linear shrinkage of 3% or higher. The fiber composition according to Comparative Example 8, when thermally treated for 24 hours, showed satisfactory shrinkage, while it showed relatively high shrinkage when thermally treated for 168 hours, which shows that the composition according to Comparative Example 8 is not supposed to be preferable under a condition of being used for a long period of time.

Moreover, a high-temperature stability is a property of not changing rapidly in melting or shrinkage required for enduring for a given period of time even above a target use temperature, and is determined by a change of melting and linear shrinkage after thermal treatment at 40-50 °C higher than the maximum use temperature for 24 hours. The ceramic fiber according to the present invention showed a superior high-temperature stability at 1260 °C or high. In more particular, the compositions according to Examples 1-9 showed linear shrinkages ranging 2.7-3.5% and 6.6-7.2% upon exposure to 1300 °C and 1350 °C respectively, without melting and a rapid change in linear shrinkage, thus exhibiting a superior high-temperature stability. However, it was impossible to measure a linear shrinkage above 1300 °C due to melting in Comparative Example C, and the fiber compositions according to Comparative Example D showed a high linear shrinkage of 7.4% at 1300 °C. Moreover, the fiber compositions comprising $B_2O_3$ of 1 wt% or higher according to Comparative Examples 4-6 showed linear shrinkages of 18% or higher at a temperature above 1300 °C.

Therefore, it can be concluded that a fiber composition should comprise 75-80 wt% of $SiO_2$, 13-25 wt% of CaO, 1-8 wt% of MgO, 0.5-3 wt% of $ZrO_2$ and 0-0.5 wt% of $Al_2O_3$, 0-0.5 wt% of $B_2O_3$ wherein an amount of $Al_2O_3$ + $ZrO_2$ is 0.5-3 wt% (preferably 0.5-1.5 wt%) so that the composition may have a fine fiber diameter and thus giving a superior heat insulating property, may be fiberizable due to a small shot content and may exhibit a superior biosolubility in a physiological saline solution with a safe operation temperature of 1260 °C (3% or less of shrinkage on exposure for 24 hours).

As explained above, the ceramic fibers prepared with the fiber compositions according to Examples of the present invention shows a superior biosolubility, fiberizability, high fiberization yield and usefulness for high heat insulating materials due to a small change of shrinkage after heat treatment at 1260 °C for 24 hours.

The biosoluble ceramic fiber for a high temperature insulation material prepared with a composition according to the present invention has a much superior dissoluton rate in a physiological saline solution compared with conventional ceramic fiber, thus enabling to decrease harmfulness since it can be easily dissolved and removed when inhaled into the lung. Moreover, considering the disadvantages of conventional biosoluble ceramic fibers, that is, the deterioration of property at high temperature, the ceramic fibers according to the present invention have a superior thermal, mechanical high-temperature property showing a shrinkage of 3% or less after thermal treatment at 1260 °C for 24 hours with the change of shrinkage not so remarkable even at 1300 °C. Further, the present invention has an economical advantage in that the low-priced materials such as dolomite or limestone can be utilized instead of high purity MgO and that the conventional fiber preparation equipment can be still employed giving a high yield.

**Claims**

1. A biosoluble ceramic fiber composition for a high temperature insulation material comprising 75-80 wt% of $SiO_2$, 13-25 wt% of CaO, 1-8 wt% of MgO, 0.5-3 wt% of $ZrO_2$ and 0-0.5 wt% of $Al_2O_3$, wherein ($ZrO_2$ + $Al_2O_3$) is contained 0.5-3 wt% and (CaO + MgO) is contained 15-26 wt%.

2. The biosoluble ceramic fiber composition according to claim 1, wherein said ($ZrO_2$ + $Al_2O_3$) is contained 0.5-1.5 wt%.

3. The biosoluble ceramic fiber composition according to claim 1 comprising 15-26 wt% of (CaO + MgO), wherein MgO is contained 4-8 wt%.

4. The biosoluble ceramic fiber composition according to any of claims 1-3, wherein said biosoluble ceramic fiber composition further comprises 0-0.5 wt% of $B_2O_3$ and 0-0.5 wt% of $P_2O_5$, wherein ($B_2O_3$ + $P_2O_5$) is contained 0.1-1 wt%.

5. The biosoluble ceramic fiber composition according to any of claims 1-4, wherein impurities selected from the group consisting of $Na_2O$, $K_2O$, $TiO_2$ and $Fe_2O_3$ is contained 1 wt% or less.

6. The biosoluble ceramic fiber prepared by using the composition according to any of claims 1-5, wherein a shot content is 50 wt% or less, an average fiber diameter does not exceed 6 μm, a thermal linear shrinkage (upon exposure to 1260 °C for 24 hrs) is 3% or less, and a constant of solubility in a physiological saline solution is 200 ng/cm$^2$·hr or higher.

FIG. 1

FIG. 2